# EUROPEAN PATENT APPLICATION

(11) **EP 3 135 742 A1**
(43) Date of publication of application: **01.03.2017**
(21) Application number: 15182646.8
(22) Date of filing: 27.08.2015
(51) Int. Cl.: C09K 8/58, E21B 43/25, C02F 5/10

(54) **PROCESS FOR OIL RECOVERY**

(71) Applicant: Shell Internationale Research Maatschappij B.V., 2596 HR Den Haag (NL)
(72) Inventor: BOELS, Luciaan, 2288GS Rijswijk (NL); KOOT, Wouter, 1031HW Amsterdam (NL)
(74) Representative: Matthezing, Robert Maarten

(57) **Abstract**

A process for recovering oil by injecting softened water into an oil-bearing formation which process comprises (a) mixing dimethyl ether with feed water containing multivalent cations and precipitating salt from the mixture of dimethyl ether and water, (b) separating precipitated salt from the mixture of dimethyl ether and water to obtain a mixture of softened water and dimethyl ether, (c) separating dimethyl ether from the mixture obtained in step (b) to obtain softened water, (d) injecting at least part of the softened water obtained in step (c) into the oil-bearing formation, and (e) recovering oil from the formation.

## Description

The present invention relates to a process for recovering oil from an oil-bearing formation with the help of softened water.

### Background of the Invention

In the recovery of oil from a subterranean formation, only a portion of the oil in the formation generally is recovered using primary recovery methods utilizing the natural formation pressure to produce the oil. A portion of the oil that cannot be produced from the formation using primary recovery methods may be produced by secondary recovery methods such as water flooding. Oil that cannot be produced from the formation using primary recovery methods and optionally secondary methods such as water flooding, may be produced by chemical enhanced oil recovery, also referred to as EOR.

If water is used for recovering oil from a formation, it is preferred that such water has relatively low salinity and more specifically relatively low multivalent ion content as this improves the amount of oil and optionally gas recovered from a formation in so-called low salinity flooding. A further reason for preferring water having relatively low multivalent ion content, is that multivalent metal ions tend to cause scaling in the formation. A problem is that water of relatively low salinity and more specifically low multivalent cation content, generally is not readily available at site. Although the salinity of the water can be reduced and/or the water can be softened on site, this can cause problems as large volumes are required which tends to consume a lot of energy. A further issue is that water of very low salinity can damage the formation. Therefore, it would be beneficial to remove multivalent cations from saline water at the site where oil and optionally gas are recovered from an oil-bearing formation.

Chemical enhanced oil recovery can utilize recovering agent, surfactant or polymer or a combination of one or more of these compounds with other chemicals such as gas to flood an oil-bearing formation to increase the amount of oil recovered from the formation. Recovering agents are well known and can be miscible or immiscible with the oil. A recovering agent which has been found to be especially suitable is dimethyl ether. Its use has been described in various publications such as WO2010002693, WO2013106156 and WO2014200801.

In many cases, it is advantageous to apply an aqueous solution of dimethyl ether. However, salt, more specifically multivalent cation containing salt, tends to deposit if dimethyl ether is added to the feed water while less dimethyl ether tends to dissolve in water of higher salinity. Therefore, it would be advantageous if the salinity of water could be reduced with the help of dimethyl ether.

CN101885568 describes the use of dimethyl ether for reducing the salinity of waste water so that the water can be purified by microorganisms in a biological pond. The process comprises liquefying dimethyl ether, mixing the liquid dimethyl ether with feed water, forming a water-containing dimethyl ether layer and a waste water layer of high salinity, depressurizing and distilling the water-containing dimethyl ether layer to produce water suitable for biological treatment and gaseous dimethyl ether which can be used again. The water obtained in the distillation is fed into a biological treatment system. The waste water layer of high salinity is combined with fresh feed water which gradually increases the salinity of the water which assists in separating off the salt. This method has the disadvantage that substantially all dimethyl ether is removed before the biological treatment of the water which requires a combination of process steps including distillation which consumes a lot of energy.

### Summary of the Invention

A process now has been found which allows removal of salt, more specifically multivalent cation containing salt, from water for use in enhanced oil recovery.

The present invention relates to a process for recovering oil by injecting softened water into an oil-bearing formation which process comprises (a) mixing dimethyl ether with feed water containing multivalent cations and precipitating salt from the mixture of dimethyl ether and water, (b) separating precipitated salt from the mixture of dimethyl ether and water to obtain a mixture of softened water and dimethyl ether, (c) separating dimethyl ether from the mixture obtained in step (b) to obtain softened water, (d) injecting at least part of the softened water obtained in step (c) into the oil-bearing formation, and (e) recovering oil from the formation.

This process is attractive in that it makes efficient use of the various product streams while it furthermore is robust. The low boiling point of dimethyl ether (-24 °C (-11 F) at atmospheric pressure) allows to separate dimethyl ether from water by relatively simple measures such as lowering the pressure, distillation or flash distillation. A further advantage is that the present invention is flexible on the amount of dimethyl ether which can be allowed to remain in the softened water as dimethyl ether promotes enhanced oil recovery.

An alternative method for removing salt would be the use of precipitation agents such as sodium bicarbonate and sodium sulphate. The present process has the advantage that it does not require large amounts of precipitation agent which would increase the overall salinity of the water. Moreover, the volume of solid salts that would need to be disposed of would increase by these precipitation agents.

### Brief Description of the Drawing

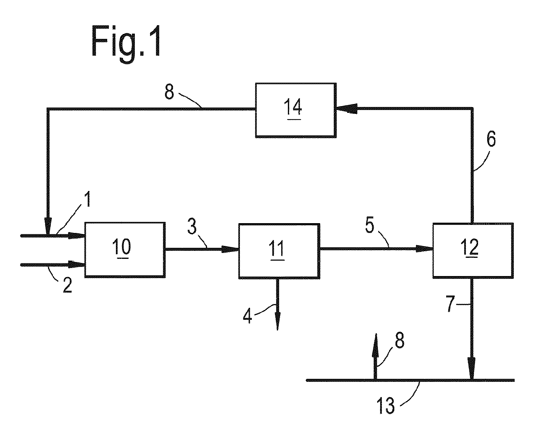

Fig. 1 is a diagram of a softening and separation system that may be used in the process of the present invention.

### Detailed Description of the Invention

Water for use in enhanced oil recovery can be derived from various sources. The water may be provided from a water source such as a river, a lake, a fresh water sea, an aquifer, formation water, seawater, brackish water or a brine solution provided by processing a feed water source. Furthermore, it is possible to use water produced in the oil recovery. In many cases, the water which is available at site will contain a relatively large amount of salt. Although the Total Dissolved Solids (TDS) content as measured by ASTM D5907-13 also includes other compounds such as organics, the TDS content is often used as a measure for the amount of salt present in water. However, the hardness of the water is often far more important than the overall salt content. The hardness is the amount of multivalent cations present. The hardness of the water is especially important if the water is to be used in combination with dimethyl ether as the solubility of multivalent cations tends to decrease in the presence of dimethyl ether especially for sulphate multivalent cation salts. A further reason to be interested in the multivalent cations content of water is that these cations tend to lead to scaling in the formation.

The feed water to be treated in the process of the present invention generally will have a TDS of from 5000 to 200,000 ppm. The feed water tends to have more specifically a TDS of at least 10,000 ppm, more specifically at least 15,000 ppm, most specifically at least 20,000 ppm. The softened water which is produced by the process of the present invention preferably has a TDS of less than 20,000 ppm, more specifically less than 10,000 ppm, more specifically less than 5000 ppm.

The feed water generally will contain at least 5 parts per million mass (ppm) of multivalent cations, more especially at least 8 ppm. The softened water will generally contain less than 5 ppm of multivalent cations, more specifically less than 4 ppm, more specifically less than 3 ppm, more specifically less than 2 ppm, most specifically less than 1 ppm of multivalent cations.

The salt content of the water which is injected into the formation should not be too low to prevent damage to the formation. The exact minimum limit will differ per formation while it is possible to increase the salt content again by mixing the softened water with untreated water. It is preferred that the salt present in the softened water injected into the formation substantially consists of monovalent cations. Most preferably, the salt present in the softened water consists of at least 95 %wt of monovalent cation containing salt, more specifically at least 98 %wt of monovalent cation containing salt, most specifically at least 99 %wt of monovalent cation containing salt.

The dimethyl ether is to be substantially liquid when being mixed with the feed water in order to facilitate mixing. The person skilled in the art will be able to assess the temperature and pressure to be applied in order to achieve this. Furthermore, a certain amount of gaseous dimethyl ether can be allowed to be present. Preferably, at least 90 wt% of the dimethyl ether is present in liquid form, more specifically at least 95 wt%, most specifically at least 98 %wt. Most preferably, the liquid dimethyl ether and feed water are mixed at a pressure of from 4 to 12 bar, more specifically of from 5 to 10 bar. The temperature preferably is of from 10 to 50 °C, more specifically of from 15 to 35 °C.

The ratio of dimethyl ether to feed water depends on the amount of multivalent cations which are to be removed. Generally, step (a) comprises mixing feed water with liquid dimethyl ether in a weight ratio of water to dimethyl ether of from 1:0.05 to 1:10, more specifically of from 1:0.5 to 1:5.

Mixing of the liquid dimethyl ether and feed water can be done in any known to the person skilled in the art. Generally, it is preferred to mix the liquids by stirring.

During mixing of dimethyl ether and feed water, salt precipitates which often can be seen from the liquid becoming cloudy. Precipitation tends not to be instantaneous which makes that feed water and dimethyl ether generally will be mixed for at least 0.5 hour, more specifically at least 1 hour, most specifically at least 2 hours.

The precipitated salt can be removed in any way known to be suitable to the person skilled in the art. The precipitated salt tends to be present as very fine solids in the mixture of dimethyl ether and water. This makes that it can be preferred to allow the salt particles to settle before removing them. A suitable method would involve the use of a clarifier comprising settling tanks with mechanical means for removal of solids, more specifically precipitated salts, from a suspension by sedimentation. The solids can be removed from the bottom of the tank as sludge. Another method can be separation of precipitated salt from a suspension with the help of a filter or membrane. The filter or membrane to be used depends on the size of the precipitated salt particles which again is influenced by the operating conditions such as speed of stirring and compounds present. Precipitated salt tends to be removed from the process as waste.

The feed water tends to be combined with a larger amount of dimethyl ether than preferably present in the water to be injected into the formation. For desalination, the amount of dimethyl ether can be up to saturation of the water. Water which is to be injected into the formation should have a dimethyl ether content which is well below dimethyl ether saturation at the various operating temperatures in order to avoid the presence of two separate phases, namely an aqueous solution of dimethyl ether and free dimethyl ether. Fluids containing separate phases tend to be less suitable for injecting into a formation. Therefore, at least part of the dimethyl ether tends to be removed from the softened water before injecting the softened water into the formation. Preferably, at least 30 wt% of the dimethyl ether is recovered, more specifically at least 50 wt% is recovered, more specifically at least 80 %wt, more specifically at least 90 %wt of the dimethyl ether is recovered.

Dimethyl ether can be separated from the softened water in any way known by the person skilled in the art. A preferred method comprises reducing the pressure of the mixture of water and dimethyl ether and/or optionally increasing its temperature. A separation process which is especially suitable is distillation and/or flash distillation. If the dimethyl ether is separated as a gas, it is preferred that at least part of the dimethyl ether is liquefied again before use in step a) in order to mix more thoroughly and easily with the liquid water.

The softened water for use in the present invention can be injected into the formation as such or can be combined with other compounds. It will be clear that a substantial amount of dimethyl ether can be left in the softened water if the water is to be used as part of an aqueous enhanced oil recovery solution containing dimethyl ether as a component aimed at dissolving oil. Preferably, at least 1 %wt of the dimethyl ether added to the feed water remains in the softened water, more specifically at least 2 %wt, more specifically at least 3 %wt, more specifically at least 4 %wt, most specifically at least 5 %wt. It is preferred to recycle at least part of the dimethyl ether separated in step (c) to step (a) as this will make that the dimethyl ether is used again in the process.

The softened water prepared by the process of the present invention also can be used in combination with other components. An aqueous enhanced oil recovery solution containing softened water prepared by the process of the present invention further can comprise surfactant, more specifically an alkaline surfactant polymer. Alkaline surfactant polymers tend to be used in combination with softened water to prevent scale deposits in the oil-bearing formation. Furthermore, these surfactant polymers are more effective in oil recovery if used in combination with softened water.

A wide range of alkaline surfactant polymers are suitable. Preferably, the surfactant polymer is an anionic surfactant. Examples of suitable surfactants are propylene oxide sulfate compounds containing from 12 to 15 carbon atoms and/or internal sulfonate compounds containing from 15 to 18 carbon atoms. An especially suitable surfactant is a blend of a propylene oxide sulfate compound containing from 12 to 15 carbon atoms and an internal sulfonate compound containing from 15 to 18 carbon atoms in a volume ratio of the propylene oxide sulfate to internal olefin sulfonate compound of from 1 : 1 to 10 : 1.

It will be clear to the person skilled in the art that further compounds can be added to the softened water before it is injected into the formation.

The oil recovery formulation comprising softened water may comprise co-solvent where the co-solvent may be a low molecular weight alcohol including, but not limited to, methanol, ethanol, and iso-propanol, isobutyl alcohol, secondary butyl alcohol, n-butyl alcohol, t-butyl alcohol, or a glycol including, but not limited to, ethylene glycol, 1,3-propanediol, 1,2-propandiol, diethylene glycol butyl ether, triethylene glycol butyl ether, or a sulfosuccinate including, but not limited to, sodium dihexyl sulfosuccinate. The co-solvent may be utilized for assisting in prevention of formation of a viscous emulsion. If present, the co-solvent preferably is present in an amount of from 100 ppm to 50000 ppm, or from 500 ppm to 5000 ppm of the total oil recovery formulation. A co-solvent may be absent from the oil recovery formulation.

The softened water can be combined with further compounds generally added such as biocides and anti-scaling agent.

Most preferably, the softened water of the present invention is used in combination with dimethyl ether. In such case, the softened water is injected into the formation in combination with dimethyl ether. The dimethyl ether can be fresh or can have been used in the water softening process of the present invention. The mixture which is injected into the oil-bearing formation generally will contain of from 60 to 95 %wt of softened water prepared by the process according to the present invention and of from 5 to 40 %wt of dimethyl ether, more specifically of from 70 to 90 %wt of softened water prepared by the process according to the present invention and of from 10 to 30 %wt of dimethyl ether.

The following example depicted in Fig. 1 is presented to further illustrate the present invention. It is not to be construed as unduly limiting the scope of the present invention.

Fig. 1 shows a softening and separation system for practicing the process of the present invention. The system comprises a mixing facility 10 to which liquid dimethyl ether is added via line 1 and feed water is added via line 2. In the mixing facility 10, the feed water and dimethyl ether are mixed thoroughly. Salt precipitates from the aqueous dimethyl ether solution but the precipitated salt particles tend to remain suspended. This suspension is sent via line 3 to separation facility 11 where the suspended salt particles can be removed in any way known to a person skilled in the art. A preferred facility is a clarifier. Precipitated salt is removed from facility 11 via line 4. In many instances, precipitated salt is not removed as a dry solid but as a mixture containing a substantial amount of liquid besides the salt particles such as a sludge. The mixture of dimethyl ether and softened water is sent via line 5 to separation facility 12 in which at least part of the dimethyl ether is separated from the softened water. A very suitable separation method comprises lowering the pressure of the mixture. Due to the differences in boiling point, dimethyl ether can be separated easily in this way. Gaseous dimethyl ether is sent via line 6 to facility 14 where the gas is liquefied again preferably by increasing the pressure. The liquid dimethyl ether obtained in liquefaction facility 14 is sent via line 8 to line 1 where it is combined with fresh dimethyl ether.

The softened water obtained in separation facility 12 is sent via line 7 to the formation 13 where it is injected into the formation in order to recover oil and optionally gas. As dimethyl ether enhances oils recovery, it may be advantageous to remove only part of the dimethyl ether from the softened water in facility 12 in which case an aqueous mixture containing dimethyl ether is sent via line 7 to formation 13 for injection. Oil and optionally gas are obtained via line 8. In most cases, the oil will be present in a mixture further containing water and often also dimethylether if the latter was used for recovery. The dimethylether can be separated from water, oil and optionally gas in any way known to someone skilled in the art for example by a process such as described in WO2014186484 and/or WO2014193655.

## Claims

1. A process for recovering oil by injecting softened water into an oil-bearing formation which process comprises
(a) mixing dimethyl ether with feed water containing multivalent cations and precipitating salt from the mixture of dimethyl ether and water,
(b) separating precipitated salt from the mixture of dimethyl ether and water to obtain a mixture of softened water and dimethyl ether,
(c) separating dimethyl ether from the mixture obtained in step (b) to obtain softened water,
(d) injecting at least part of the softened water obtained in step (c) into the oil-bearing formation, and
(e) recovering oil from the formation.

2. A process according to claim 1, in which step (c) further comprises recycling to step (a) at least part of the dimethyl ether separated from the mixture obtained in step (b).

3. A process according to claim 1 in which step (a) comprises mixing feed water with liquid dimethyl ether in a weight ratio of water to dimethyl ether of from 1:0.05 to 1:10.

4. A process according to claim 1 in which the feed water contains at least 5 parts per million mass (ppm) of multivalent cations.

5. A process according to claim 4 in which the softened water contains less than 5 ppm of multivalent cations.

6. A process according to claim 1 in which the liquid dimethyl ether and feed water are mixed at a pressure of from 5 to 10 bar.

7. A process according to claim 1 in which precipitated salt is removed from the mixture of dimethyl ether and water by settling.

8. A process according to claim 1 in which oil and optionally gas are recovered by injecting into the formation an enhanced oil recovery formulation comprising softened water and dimethyl ether.

9. A process according to claim 8 in which the enhanced oil recovery formulation comprises of from 60 to 95 %wt of softened water and of from 5 to 40 %wt of dimethyl ether.

10. A process according to claim 1 which comprises injecting into the formation a mixture of softened water and alkaline surfactant polymer.
